# EUROPÄISCHE PATENTSCHRIFT

(11) **EP 3 870 876 B1**
(45) Veröffentlichungstag und Bekanntmachung des Hinweises auf die Patenterteilung: **19.08.2026**
(21) Anmeldenummer: 19782580.5
(22) Anmeldetag: 01.10.2019
(51) Int. Cl.: F16G 13/16

(54) **RINNENCLIP FÜR FÜHRUNGSRINNEN VON ENERGIEFÜHRUNGSKETTEN**
CHANNEL CLIP FOR GUIDE CHANNELS OF POWER CONDUCTION CHAINS
CLIP POUR GOULOTTE POUR DES GOULOTTES DE GUIDAGE DE CHAÎNES D'ALIMENTATION EN ÉNERGIE

(30) Priorität: 22.10.2018 DE 202018106037 U
(43) Veröffentlichungstag der Anmeldung: 01.09.2021
(73) Patentinhaber: igus SE & Co. KG, 51147 Köln (DE)
(72) Erfinder: OTTERSBACH, Jörg, 53332 Bornheim (DE); THEISS, Georg, 50678 Köln (DE)
(74) Vertreter: Lippert Stachow Patentanwälte Rechtsanwälte
(86) Internationale Anmeldenummer: PCT/EP2019/076632
(87) Internationale Veröffentlichungsnummer: WO 2020/083621

(56) Entgegenhaltungen:
- WO-A1-2006/113870
- WO-A1-83/00272
- DE-A1- 102006 026 250
- DE-U1- 202015 101 341
- DE-U1- 9 405 363
- GB-A- 2 202 270

## Beschreibung

Die Erfindung betrifft einen Rinnenclip zur Befestigung von Leitungen außen an vertikalen Außenwänden von Führungsrinnen von Energieführungsketten, wobei der Rinnenclip im Wesentlichen aus einem U-förmigen Bügel aus elastischem Kunststoffmaterial mit einem ersten U-Schenkel und einem zweiten U-Schenkel besteht und die beiden U-Schenkel einen Aufnahmebereich für die zu halternden Leitungen bilden.

Es besteht häufig der Wunsch bzw. die Notwendigkeit, Leitungen außen an den Führungsrinnen von Energieführungsketten zu befestigen, wobei diese Leitungen stationär verlegt werden und die Bewegungen der Energieführungsketten nicht mitmachen.

Der Erfindung liegt die Aufgabe zugrunde, einen Rinnenclip zu schaffen, mit welchem Leitungen mit geringem Aufwand stationär an den Außenseiten von stationären Führungsrinnen befestigt werden können.

Erfindungsgemäß wird diese Aufgabe durch die in dem Anspruch 1 aufgeführten Merkmale gelöst.

Aus der DE 94 05 363 U1 ist ein Halteclip für die Verlegung von Kabeln, Schläuchen, Rohren und dergleichen bekannt. Dieser Halteclip weist einen Aufnahmeraum auf, der von einem unteren steifen Sockelabschnitt, zwei von diesem im Abstand voneinander abstehenden Seitenarmen und einem schwenkbaren Verschlussarm begrenzt wird. Die Seitenarme sind dabei durch Innen- und Außenrippen ausgesteift, sodass beim Verschwenken des Verschlussarms ein an diesem vorgesehener Rastkörper passgenau in eine am oberen Ende des gegenüberliegenden Seitenarms ausgebildete Aufnahmeöffnung eingreift. Im Übrigen geht es bei diesem bekannten Halteclip ausschließlich darum, das zu halternde Strangmaterial mithilfe von einem Federabschnitt, Federzungen sowie weiteren Maßnahmen in dem Halteclip fest und unverrückbar einzuklemmen, um dem Strangmaterial einen sicheren Halt zu verschaffen.

Ferner sind aus der WO 83/00272 A1 Klemmen zur Halterung von Drähten bekannt, die bei geringem Platzbedarf eingesetzt werden, beispielsweise innerhalb eines Chassis, angrenzend an eine Seitenwand. Diese bekannte Klemme weist bereits zwei U-förmige Bügel auf, zwischen denen ein Aufnahmebereich für die zu halternden Drähte gebildet ist. Bei diesen Klemmen werden auch Schnappverbindungen zum Verschließen des Aufnahmebereichs verwendet, die zwei übereinander greifende und hinter einander elastisch einrastende Haltenasen aufweisen.

Bei der Erfindung soll dagegen ein Rinnenclip zur Befestigung von Leitungen außen an vertikalen Außenwänden von Führungsrinnen von Energieführungsketten geschaffen werden. Die Führungsrinnen, die die Bewegungen der Energieführungsketten sowie den darin eingebetteten Leitungen nicht mitmachen, sind stationär verlegt und sind gemäß ihrer Bestimmung nach oben hin offen, so dass sich die Energieführungsketten je nach Bedarf aus diesen Führungsketten herausbewegen und sich bei der Bewegung in Gegenrichtung wieder in die Führungsrinnen einbetten lassen. Zur Halterung von zusätzlichen Leitungen bieten sich demgemäß die vertikalen Außenwände der Führungsrinnen an. Insofern ist der erfindungsgemäße Rinnenclip ausschließlich zur Befestigung an den vertikalen Außenwänden der Führungsrinnen angepasst.

Der erfindungsgemäße Rinnenclip erlaubt es, auf sehr einfache Weise stationäre Leitungen außen an den Führungsrinnen von Energieführungsketten zu verlegen und diese auch wieder problemlos zu lösen.

Die an den oberen Enden der U-Schenkel bzw. des Querstegs vorgesehene Schnappverbindung ist vorzugsweise derart gestaltet, dass die an dem Quersteg vorgesehene Haltenase nach oben gerichtet ist und dass die an dem zweiten U-Schenkel angeordnete Haltenase nach unten weist und über die an dem Quersteg vorgesehene Haltenase hinweg gleitend hinter diese einrastet.

Um das Einrasten der beiden Nasen zu erleichtern, kann unterhalb der an dem zweiten U-Schenkel vorgesehenen Nase eine Lippe angeordnet sein, die beim Einrasten der Schnappverbindung unter den Quersteg greift. Dabei wird gleichzeitig die Schnappverbindung zusätzlich in ihrer eingerasteten Stellung gesichert.

Die beiden U-Schenkel können herstellungsmäßig parallel angeordnet sein, wobei der zweite Schenkel zum Öffnen des Clips und zum Einlegen bzw. Herausnehmen der Leitungen elastisch aufgebogen wird.

Alternativ kann der zweite U-Schenkel herstellungsmäßig auch zu seinem oberen Ende hin von dem ersten U-Schenkel weggerichtet sein, wobei er zum Schließen der Clips elastisch in Richtung des Querstegs gebogen werden muss, bis die Schnappverbindung einrastet.

Damit der Rinnenclip eine ausreichende Stabilität erhält und die Leitungen ordnungsgemäß darin gehaltert werden, kann der U-förmige Bügel die Form eines breiten Bandes aufweisen, in dessen Aufnahmebereich die Leitungen zuverlässig gelagert werden können.

Die aus den beiden hintereinander einrastenden Haltenasen bestehende Schnappverbindung erstreckt sich dabei zweckmäßig über die gesamte Breite des Bandes.

Eine der beiden Haltenasen der Schnappverbindung weist in ihrem mittleren Bereich vorzugsweise eine Ausnehmung und die andere Haltenase einen in die Ausnehmung eingreifenden Vorsprung auf, sodass im geschlossenen Zustand des Clips eine seitliche Fixierung der beiden U-Schenkel relativ zueinander gewährleistet ist.

Zur leichteren Handhabung des Öffnens und Schließens des Clips kann am oberen Ende des zweiten U-Schenkels ein nach oben gerichteter Hebelarm vorgesehen sein, der bequem von Hand betätigt werden kann, um das Öffnen und Verschließen der Schnappverbindung zu erleichtern.

Wenn an den Außenwänden der Führungsrinnen Aufnahmetaschen vorgesehen sind, so kann an der Außenseite des ersten U-Schenkels ein nach unten gerichteter Halteschenkel vorgesehen sein, der in den oberen Rand der jeweiligen Aufnahmetasche eingehängt werden kann.

Um einen stabilen Halt des Clips an einer solchen Aufnahmetasche zu gewährleisten, kann an der Innenseite des Haltschenkels eine elastisch verformbare Lippe vorgesehen sein, die sich beim Aufsetzen des Clips mit einer gewissen Vorspannung an die Außenseite der Aufnahmetasche anlegt.

Wenn der erfindungsgemäße Halteclip an Führungsrinnen mit glatten Außenwänden befestigt werden sollen, kann an der Oberseite des an dem ersten U-Schenkel vorgesehenen Querstegs ein mit einer Durchgangsbohrung versehener Vorsprung angeordnet sein, durch den bei der Montage des Clips beispielsweise eine Schraube eingesteckt wird, die entweder in eine Gewindebohrung der Führungsrinne eingeschraubt oder aber durch eine in der Führungsrinne vorgesehene Bohrung gesteckt und von der Innenseite der Führungsrinne aus durch eine Mutter gesichert wird.

Gemäß Anspruch 1 sind an mindestens einer Seite des ersten U-Schenkels in Richtung der zu verlegenden Leitungen weisende vorspringende Haltestege angeordnet sein, die an ihren dem U-Schenkel abgewandten Ende Verdickungen aufweisen. An diesen Haltestegen können die zu verlegenden Leitungen zusätzlich mit Hilfe von Kabelbindern befestigt werden.

Die erfindungsgemäßen Rinnenclips werden zweckmäßig als einstückige Kunststoff-Spritzgussteile hergestellt.

Die Erfindung ist in der Zeichnung beispielhaft dargestellt und im nachstehenden im Einzelnen anhand der Zeichnung beschrieben. Es zeigen:
- Fig. 1:: eine perspektivische Ansicht eines ersten Ausführungsbeispiels des erfindungsgemäßen Rinnenclips,
- Fig. 2:: eine Seitenansicht des Rinnenclips gemäß Fig. 1,
- Fig. 3:: eine Draufsicht auf den Rinnenclip in Richtung des Pfeils III aus Fig. 2,
- Fig.4:: eine Ansicht in Richtung des Pfeils IV aus Fig. 2,
- Fig. 5:: in perspektivischer Darstellung ein zweites Ausführungsbeispiel des erfindungsgemäßen Rinnenclips,
- Fig. 6:: eine Seitenansicht des Rinnenclips gemäß Fig. 5,
- Fig. 7:: eine Ansicht des Rinnenclips gemäß Fig. 6 in Richtung des Pfeils VII,
- Fig. 8:: eine Draufsicht auf den Rinnenclip gemäß Fig. 6 in Richtung des Pfeils VIII,
- Fig. 9:: eine perspektivische Ansicht einer weiteren Ausführungsform des erfindungsgemäßen Rinnenclips,
- Fig. 10:: eine Seitenansicht der Ausführungsform gemäß Fig. 9,
- Fig. 11:: eine perspektivische Ansicht eines weiteren Ausführungsbeispiels des erfindungsgemäßen Rinnenclips,
- Fig. 12:: ein weiteres Ausführungsbeispiel des Rinnenclips,
- Fig. 13:: die perspektivische Darstellung eines weiteren Ausführungsbeispiels des erfindungsgemäßen Rinnenclips,
- Fig. 14:: eine Seitenansicht des Rinnenclips gemäß Fig. 13,
- Fig. 15:: eine Ansicht des Rinnenclips gemäß Fig. 14 in Richtung des Pfeils XV,
- Fig. 16:: eine Draufsicht auf den Rinnenclip gemäß Fig. 14 in Richtung des Pfeils XVI,
- Fig. 17:: die perspektivische Darstellung einer weiteren Ausführungsform des erfindungsgemäßen Rinnenclips und
- Fig. 18:: die Seitenansicht des Rinnenclips gemäß Fig. 17
.

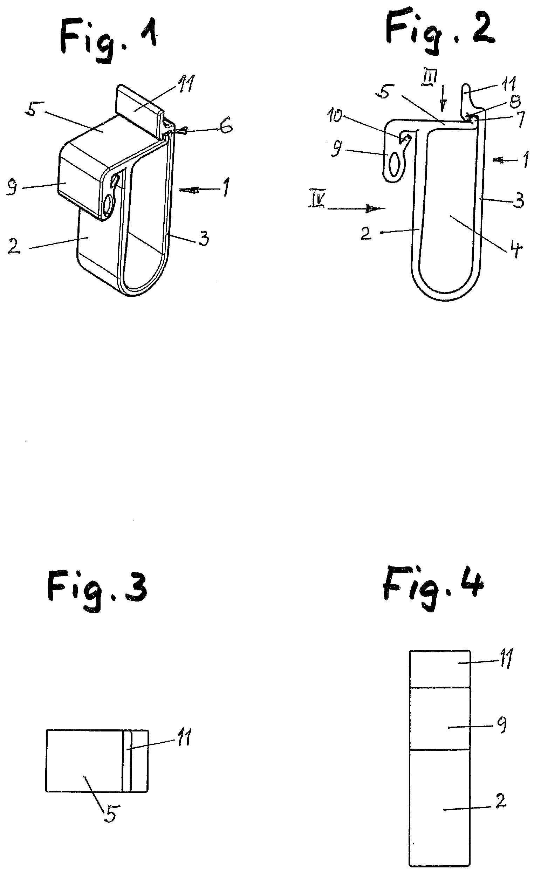

Nach Fig. 1 bis 4 besteht der erfindungsgemäße Rinnenclip aus einem U-förmigen Bügel 1 aus elastischem Kunststoffmaterial mit einem ersten U-Schenkel 2 und einem zweiten U-Schenkel 3. Die beiden U-Schenkel 2 und 3 weisen nach oben und bilden einen Aufnahmebereich 4 für die zu halternden Leitungen, die allerdings in der Zeichnung nicht dargestellt sind.

Am oberen Ende des ersten U-Schenkels 2 ist ein Quersteg 5 vorgesehen, der etwa im rechten Winkel an den ersten U-Schenkel 2 angeformt ist und sich in Richtung zu dem oberen Ende des zweiten U-Schenkels 3 erstreckt.

Zum Verschließen des Aufnahmebereichs 4 ist an dem freien Ende des Querstegs 5 und an dem angrenzenden oberen Ende des zweiten U-Schenkels 3 eine einrastbare Schnappverbindung 6 vorgesehen, die aus zwei übereinander greifenden und hintereinander elastisch einrastenden Haltenasen 7 und 8 besteht, wobei die eine Haltenase 7 an dem Quersteg 5 und die andere Haltenase 8 an einem einwärtsgebogenen oberen Bereich des zweiten U-Schenkels 3 angeordnet ist.

Die an dem Quersteg 6 vorgesehene Haltenase 7 ist nach oben gerichtet und die an dem zweiten U-Schenkel 3 angeordnete Haltenase 8 weist nach unten und rastet über die an dem Quersteg 5 vorgesehene Haltenase 7 ein.

Der erfindungsgemäße Rinnenclip wird vorzugsweise als Kunststoff-Spritzgussteile hergestellt. Dabei erfolgt die Herstellung bei dem in Fig. 1 bis 4 dargestellten Ausführungsbeispiel derart, dass die beiden U-Schenkel 2 und 3 parallel angeordnet sind. Zum Öffnen des Clips und zum Einlegen bzw. Herausnehmen der Leitungen muss dabei der zweite U-Schenkel 3 aufgebogen werden. Zum Schließen der Schnappverbindung 6 federt der zweite U-Schenkel 3 wieder in die Ausgangslage, zurück, wobei die Schnappverbindung 6 automatisch einrastet bzw. mit leichtem Druck geschlossen werden kann.

Die in Fig. 1 bis 4 dargestellte Ausführungsform des Rinnenclips ist für eine in der Zeichnung nicht dargestellte Führungsrinne vorgesehen, die an ihrer vertikalen Außenseite Aufnahmetaschen aufweist. Zur Befestigung des Rinnenclips an einer solchen Aufnahmetasche ist an dem oberen Ende des Außenbereichs des ersten U-Schenkels 2 ein nach unten gerichteter Halteschenkel 9 vorgesehen, der auf den oberen Rand einer Aufnahmetasche der Führungsrinne aufgesteckt werden kann.

Zur Verbesserung des Sitzes an dem Rand einer solchen Aufnahmetasche ist an der Innenseite des Halteschenkels 9 eine elastische Lippe 10 vorgesehen, die sich beim Aufstecken des Rinnenclips auf den Rand der Haltetasche elastisch verformt und dadurch einen Anpressdruck und somit eine verbesserte Halterung erzeugt.

Zum Erleichtern des Öffnens und Schließens der Schnappverbindung 6 ist an dem oberen Ende des zweiten U-Schenkels 3 ein nach oben gerichteter Haltearm 11 vorgesehen, der von Hand leicht betätigt werden kann.

Der U-förmige Bügel 1, der in Fig. 1 bis 4 dargestellt ist, weist die Form eines breiten Bandes auf, sodass eine ausreichende Stabilität besteht, um die eingelegten Leitungen sicher zu haltern.

Die Schnappverbindung 6 mit ihren Nasen 7 und 8 erstreckt sich dabei über die gesamte Breite des Bandes, sodass die Schnappverbindung 6 über einen relativ breiten Klemmbereich verfügt.

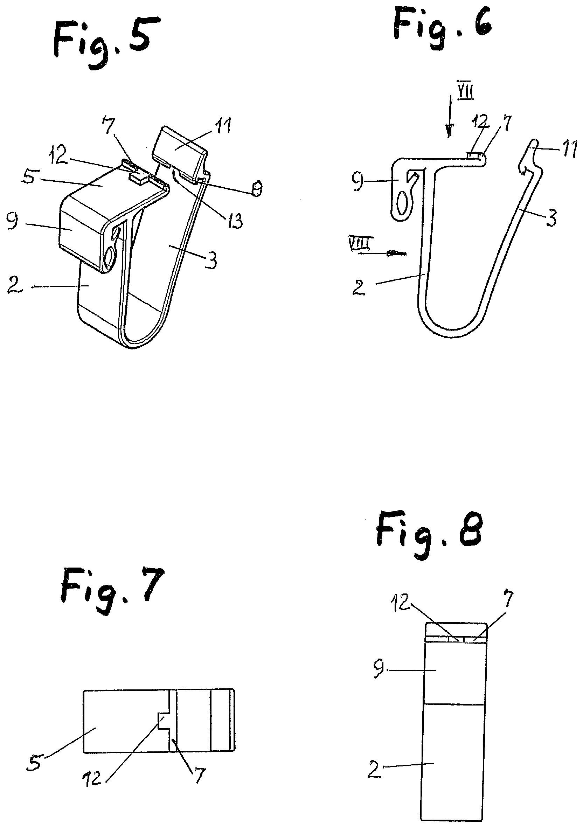

In Fig. 5 bis 8 ist ein weiteres Ausführungsbeispiel des erfindungsgemäßen Rinnenclips dargestellt. Dieser weist die gleichen Teile auf wie bei dem in Fig. 1 bis 4 dargestellten Ausführungsbeispiel, sodass für identische Teile die gleichen Positionszahlen verwendet worden sind.

Der wesentliche Unterschied zu dem ersten Ausführungsbeispiel besteht darin, dass der zweite U-Schenkel 3 zu seinem oberen Ende hin von dem ersten U-Schenkel 2 weggerichtet ist und zum Schließen des Clips elastisch in Richtung des Querstegs 5 gebogen werden muss, bis die Schnappverbindung 6 einrastet.

Beim Öffnen der Schnappverbindung federt der zweite U-Schenkel 3 zurück in die in Fig. 5 und 6 dargestellte Ausgangslage.

Bei diesem Ausführungsbeispiel weist die an dem Quersteg 5 vorgesehene Haltenase 7 in ihrem mittleren Bereich einen Vorsprung 12 auf. Die an dem zweiten U-Schenkel 3 vorgesehene Haltenase 8 ist in ihrem mittleren Bereich mit einer Ausnehmung 13 versehen, die etwa so breit ist wie der an der Haltenase 7 ausgebildete Vorsprung 12. Wenn die Schnappverbindung 6 eingerastet ist, greift der Vorsprung 12 genau in die Ausnehmung 13, so dass die Schnappverbindung gegen seitliche Verschiebung gesichert ist.

Diese Sicherung gegen seitliches Verschieben kann selbstverständlich auch bei dem in Fig. 1 bis 4 dargestellten Ausführungsbeispiel verwirklicht werden.

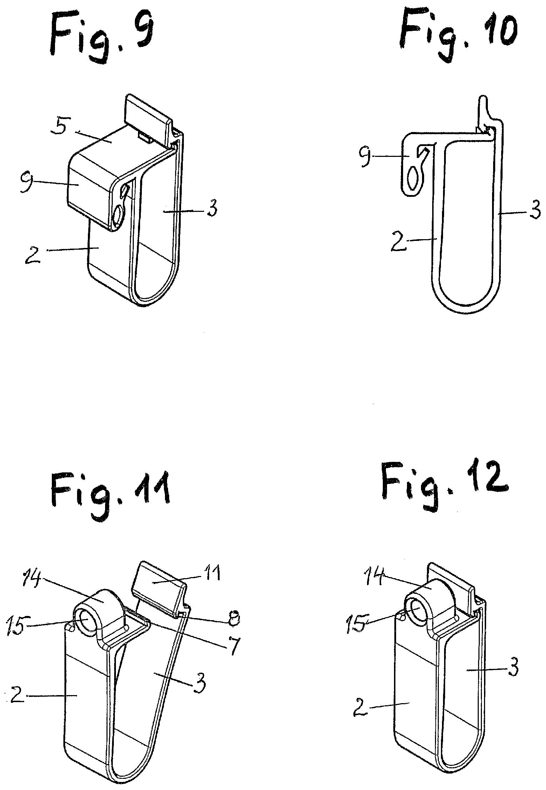

In Fig. 9 und 10 ist ein weiteres ähnliches Ausführungsbeispiel dargestellt, bei welchem die identischen Teile mit wieder mit den gleichen Positionszahlen versehen sind, wie bei den vorangehenden Ausführungsbeispielen.

Der einzige Unterschied zu dem in Fig. 5 bis 8 dargestellten Ausführungsbeispiel besteht darin, dass die U-Schenkel 2 und 3 des U-förmigen Bügels 1 bei der Herstellung etwa parallel geformt sind. Zum Öffnen des Clips muss daher der zweite U-Schenkel 3 aufgebogen werden. Nach dem Einlegen der Leitungen in den Aufnahmebereich 4 federt der zweite U-Schenkel 3 wieder in seine Ausgangslage zurück, in welcher die Schnappverbindung schließt.

Auch bei dieser Ausführungsform kann die in Fig. 5 bis 7 dargestellte seitliche Sicherung in Form der Ausnehmung 13 und des in dieser eingreifenden Vorsprungs 12 vorgesehen sein.

In Fig. 11 ist ein Ausführungsbeispiel des erfindungsgemäßen Rinnenclips dargestellt, welches an einer Führungsrinne mit einer glatten vertikalen Außenwand angebracht wird. Dazu ist an der Oberseite des an dem ersten U-Schenkel 2 vorgesehenen Querstegs 5 eine Erhebung 14 vorgesehen, die eine Durchgangsbohrung 15 aufweist. Die Durchgangsbohrung 15 verläuft genau senkrecht zu dem ersten U-Schenkel 2, sodass zur Montage des Rinnenclips die Außenfläche des ersten U-Schenkel 2 gegen die glatte, vertikale Außenwand der Führungsrinne angelegt und in dieser Lage fixiert wird. Die Fixierung erfolgt beispielsweise mittels einer in der Wand der Zeichnung nicht dargestellten Schraube, die durch die Durchgangsbohrung 15 hindurchgreift und entweder in eine in der Führungsrinne vorgesehene Gewindebohrung eingedreht oder durch eine Mutter gesichert wird, die von der Innenseite der Führungsrinne aus auf die Schraube aufgedreht wird.

Bei dem in Fig. 11 dargestellten Ausführungsbeispiel ist der zweite U-Schenkel 3 zu seinem oberen Ende hin von dem ersten U-Schenkels 2 weggerichtet, sodass er zum Schließen des Clips elastisch in Richtung des Querstegs 5 gedrückt werden muss, bis die Schnappverbindung 6 einrastet.

Das in Fig. 12 dargestellte Ausführungsbeispiel entspricht der Ausführungsform gemäß Fig. 11 mit der Ausnahme, dass die beiden U-Schenkel 2 und 3 etwa parallel zueinander angeordnet sind, sodass zum Öffnen der Schnappverbindung der zweite U-Schenkel 3 aufgebogen werden muss. Zum Verschließen des Aufnahmebereichs 4 schwenkt der zweite U-Schenkel 3 automatisch wieder in seine Ausgangslage, sodass die Schnappverbindung 6 selbsttätig schließt bzw. mit leichtem Druck an dem Hebelarm 11 geschlossen wird.

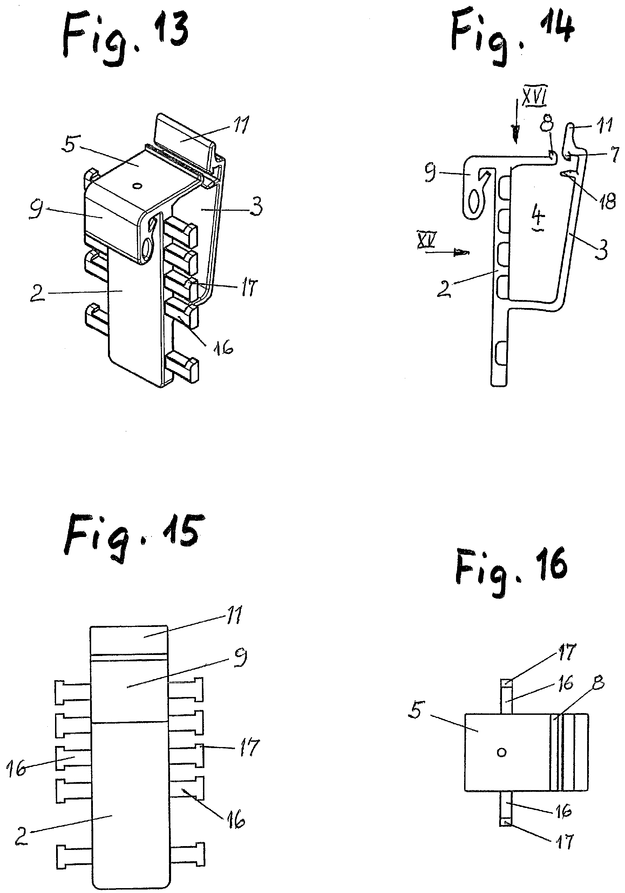

Das in Fig. 13 bis 16 dargestellte Ausführungsbeispiel entspricht in seinen wesentlichen Funktionen den vorangehend beschriebenen Ausführungsbeispielen.

Allerdings sind bei diesem Ausführungsbeispiel an beiden Seiten des ersten U-Schenkels 2 in Richtung der zur verlegenden Leitungen weisende vorspringende Haltestege 16 vorgesehen, die an ihren dem U-Schenkel 2 abgewandten Ende Verdickungen 17 aufweisen. Diese Haltestege 16 dienen dazu, die zu verlegenden Leitungen mittels Kabelbindern zusätzlich zu befestigen. Die Verdickungen 17 haben dabei die Aufgabe, die Kabelbinder in ihrer Position zu halten, damit diese nicht seitlich herunterrutschen.

Ein weiterer Unterschied zu den vorangehend beschriebenen Ausführungsbeispielen besteht darin, dass der erste U-Schenkel 2 ein Stück nach unten verlängert ist.

Ein zusätzliches Merkmal besteht darin, dass unterhalb der an dem zweiten U-Schenkel 3 vorgesehenen Haltenase 8 eine Lippe 18 vorgesehen ist, die das Einrasten der Schnappverbindung erleichtert und zusätzlich die Schnappverbindung gegen ungewolltes Öffnen sichert. Eine solche Haltenase 18 kann selbstverständlich auch bei den anderen Ausführungsbeispielen verwirklicht werden, um denselben Effekt zu erzielen.

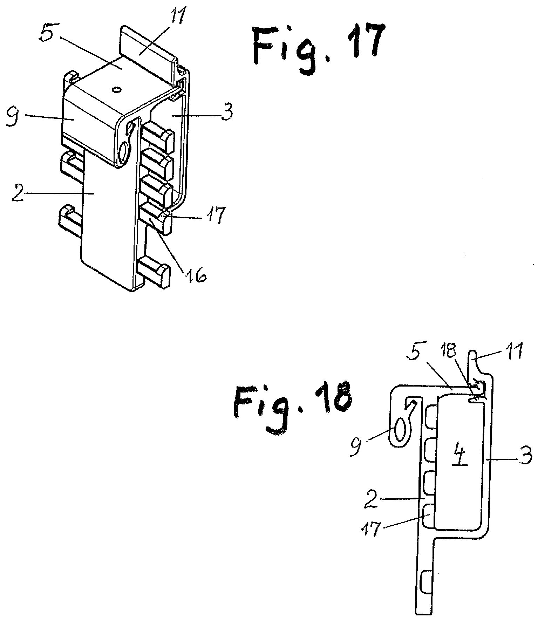

In Fig. 17 und 18 ist ein ähnliches Ausführungsbeispiel wie in Fig. 13 bis 16 dargestellt, wobei ein Unterschied darin besteht, dass die beiden U-Schenkel 2 und 3 parallel zueinander angeordnet sind, sodass zum Öffnen der Schnappverbindung 6 der zweite U-Schenkel 3 in der Zeichnung nach rechts aufgebogen werden muss.

Durch die vorliegende Erfindung wird somit ein sehr einfaches und zweckmäßiges Halteelement geschaffen, das sich leicht handhaben lässt und mit den sich Leitungen problemlos und sicher an den Außenwänden der Führungsbahnen von Energieführungsketten befestigen lassen.

### Bezugszeichenliste

- 1: U-förmiger Bügel
- 2: erster U-Schenkel
- 3: zweiter U-Schenkel
- 4: Aufnahmebereich
- 5: Quersteg
- 6: Schnappverbindung
- 7: Haltenase
- 8: Haltenase
- 9: Halteschenkel
- 10: elastische Lippe
- 11: Hebelarm
- 12: Vorsprung
- 13: Ausnehmung
- 14: Erhebung
- 15: Durchgangsbohrung
- 16: Haltestege
- 17: Verdickungen
- 18: Lippe

## Patentansprüche

1. Rinnenclip zur Befestigung von Leitungen außen an vertikalen Außenwänden von Führungsrinnen von Energieführungsketten, wobei
- der Rinnenclip im Wesentlichen aus einem U-förmigen Bügel (1) aus elastischem Kunststoffmaterial mit einem ersten U-Schenkel (2) und einem zweiten U-Schenkel (3) besteht,
- die beiden U-Schenkel (2, 3) einen Aufnahmebereich(4)für die zu halternden Leitungen bilden,
- der erste U-Schenkel (2) zur Anlage an der jeweiligen Außenwand einer Führungsrinne geeignet ist und eine Vorrichtung zur Halterung des Rinnenclips an der Führungsrinne aufweist,
- an dem oberen Ende des ersten, an der Führungsrinne anliegenden U-Schenkels (2) ein Quersteg (5) vorgesehen ist, der sich in Richtung zu dem oberen Ende des zweiten U-Schenkels (3) erstreckt,
- zum Verschließen des Aufnahmebereichs (4) an dem freien Ende des Querstegs (5) und an dem angrenzenden oberen Ende des zweiten U-Schenkels (3) eine einrastbare Schnappverbindung (6) vorgesehen ist,
- die Schnappverbindung (6) zwei übereinander greifende und hintereinander elastisch einrastende Haltenasen (7, 8) aufweist,
- der zweite U-Schenkel (3) elastisch gebogen werden kann und **dadurch gekennzeichnet, dass**
- an mindestens einer Seite des ersten U-Schenkels (2) in Richtung der zu verlegenden Leitungen weisende vorspringende Haltestege (16) angeordnet sind, die an ihren dem U-Schenkel (2) abgewandten Enden Verdickungen (17) aufweisen.

2. Rinnenclip nach Anspruch 1, **dadurch gekenn**- **zeichnet**, dass die an dem Quersteg (5) vorgesehene Haltenase (7) nach oben gerichtet ist und dass die an dem zweiten U-Schenkel (3) angeordnete Haltenase (8) nach unten weist und über die an dem Quersteg (5) vorgesehene Haltenase (7) hinweggleitend hinter diese einrastet.

3. Rinnenclip nach Anspruch 2, **dadurch gekenn- zeichnet**, dass unterhalb der an dem zweiten U-Schenkel (3) vorgesehenen Haltenase (8) eine Lippe (18) angeordnet ist, die beim Einrasten der Schnappverbindung (6) unter den Quersteg (5) gereift.

4. Rinnenclip nach einem der Ansprüche 1 bis 3, **dadurch gekennzeichnet , dass** die beiden U-Schenkel (2, 3) parallel zueinander angeordnet sind und dass der zweite U-Schenkel (3) zum Öffnen des Rinnenclips und zum Einlegen bzw. Herausnehmen der Leitungen elastisch aufgebogen werden muss.

5. Rinnenclip nach einem der Ansprüche 1 bis 3, **dadurch gekennzeichnet, dass** der zweite U-Schenkel (3) zu seinem oberen Ende hin von dem ersten U-Schenkel (2) weggerichtet ist und zum Schließen des Rinnenclips elastisch in Richtung zu dem Quersteg (5) hin gebogen werden muss, bis die Schnappverbindung (6) einrastet.

6. Rinnenclip nach einem der Ansprüche 1 bis 5, **dadurch gekennzeichnet, dass** der U-förmige Bügel (1) die Form eines breiten Bandes aufweist.

7. Rinnenclip nach Anspruch 6, **dadurch gekenn- zeichnet**, dass sich die Schnappverbindung (6) über die gesamte Breite des Bandes erstreckt.

8. Rinnenclip nach Anspruch 6 oder 7, **dadurch ge- kennzeichnet**, dass die eine Haltenase (8) der Schnappverbindung in ihrem mittleren Bereich eine Ausnehmung (13) und die andere Haltenase (7) einen in die Ausnehmung (13) eingreifenden Vorsprung (12) aufweist.

9. Rinnenclip nach einem der Ansprüche 1 bis 8, **dadurch gekennzeichnet, dass** am oberen Ende des zweiten U-Schenkels (3) ein nach oben gerichteter Hebelarm (11) zur Erleichterung des Öffnens und Schließens der Schnappverbindung (6) vorgesehen ist.

10. Rinnenclip nach einem der Ansprüche 1 bis 9 für Führungsrinnen mit an ihren vertikalen Außenwänden vorgesehenen Aufnahmetaschen, **dadurch gekennzeichnet, dass** an dem oberen Ende des Außenbereichs des ersten U-Schenkels (2) ein nach unten gerichteter Halteschenkel (9) vorgesehen ist, der in die jeweilige Aufnahmetasche eingehängt wird.

11. Rinnenclip nach Anspruch 10, **dadurch gekenn- zeichnet**, dass an der Innenseite des Halteschenkels (9) eine elastische Lippe (10) vorgesehen ist.

12. Rinnenclip nach einem der Ansprüche 1 bis 9 für Führungsrinnen mit glatten vertikalen Außenwänden,
**dadurch gekennzeichnet, dass** an der Oberseite des an dem ersten U-Schenkel (2) angeordneten Querstegs (5) eine mit einer Durchgangsöffnung (15) versehenen Erhebung (14) angeordnet ist, wobei die Durchgangsöffnung (15) für ein Befestigungselement vorgesehen ist.

13. Rinnenclip nach einem der Ansprüche 1 bis 12,
**dadurch gekennzeichnet, dass** der Rinnenclip als einstückiges Kunststoff-Spritzgussteil ausgebildet ist.

## Claims

1. A channel clip for fixing lines externally to vertical outer walls of guide channels of energy guide chains, wherein
- the channel clip substantially comprises a U-shaped bracket (1) of elastic plastic material having a first U-limb (2) and a second U-limb (3),
- the two U-limbs (2, 3) form a receiving region (4) for the lines to be held,
- the first U-limb (2) is suitable for abutting to the corresponding outer wall of the guide channel and comprises a device for holding the channel clip to the guide channel,
- at the upper end of the first U-limb (2), which is abutting the guide channel, is provided a transverse web (5) extending in the direction towards the upper end of the second U-limb (3),
- a latchable snap connection (6) for closing the receiving region (4) is provided at the free end of the transverse web (5) and at the adjoining upper end of the second U-limb (3),
- the snap connection (6) has two holding noses (7, 8) which engage over each other and which are elastically latchable one behind the other,
- the second U-limb (3) can be elastically bent, and
**characterised in that**
- arranged at at least one side of the first U-limb (2) are projecting holding bars (16) which face in the direction of the lines to be laid and which have thickened portions (17) at their ends remote from the U-limb (2).

2. A channel clip as set forth in claim 1 **characterised in that** the holding nose (7) provided on the transverse web (5) is directed upwardly and the holding nose (8) provided on the second U-limb (3) faces downwardly and latches behind the holding nose (7) provided on the transverse web (5) by sliding over it.

3. A channel clip as set forth in claim 2 **characterised in that** disposed beneath the holding nose (8) on the second U-limb (3) is a lip (18) which upon latching engagement of the snap connection (6) grips under the transverse web (5).

4. A channel clip as set forth in one of claims 1 through 3 **characterised in that** the two U-limbs (2, 3) are arranged parallel to each other and the second U-limb (3) has to be elastically bent open for opening the channel clip and for inserting or removing the lines.

5. A channel clip as set forth in one of claims 1 through 3 **characterised in that** the second U-limb (3) towards its upper end is directed away from the first U-limb (2) and to close the channel clip has to be elastically bent in the direction of the transverse web (5) until the snap connection (6) latches.

6. A channel clip as set forth in one of claims 1 through 5 **characterised in that** the U-shaped bracket (1) is in the form of a wide band.

7. A channel clip as set forth in claim 6 **characterised in that** the snap connection (6) extends over the entire width of the band.

8. A channel clip as set forth in claim 6 or claim 7 **characterised in that** the one holding nose (8) of the snap connection has a recess (13) in its central region and the other holding nose (7) has a projection (12) engaging into the recess (13).

9. A channel clip as set forth in one of claims 1 through 8 **characterised in that** provided at the upper end of the second U-limb (3) is an upwardly directed lever arm (11) for facilitating opening and closing of the snap connection (6).

10. A channel clip as set forth in one of claims 1 through 9 for guide channels having receiving pockets provided at their vertical outside walls, **characterised in that** provided at the upper end of the outside region of the first U-limb (2) is a downwardly directed holding limb (9).

11. A channel clip as set forth in claim 10 **characterised in that** an elastic lip (10) is provided at the inside of the holding limb (9).

12. A channel clip as set forth in one of claims 1 through 9 for guide channels with smooth vertical outside walls, **characterised in that** provided at the top side of the transverse web (5) arranged on the first U-limb (2) is a raised portion (14) provided with a through opening (15), wherein the through opening (15) is provided for the fixing element.

13. A channel clip as set forth in one of claims 1 through 12 **characterised in that** the channel clip is in the form of a one-piece plastic injection molding.

## Revendications

1. Clip pour goulotte destinée à la fixation de câbles à l'extérieur des parois verticales des goulottes des chaînes porte-câbles, dans lequel
- le clip pour goulotte est constitué essentiellement d'un étrier en forme de U (1) en matière plastique élastique, comportant une première branche en forme de U (2) et une deuxième branche en forme de U (3),
- les deux branches en forme de U (2, 3) forment une zone de logement (4) pour les câbles à supporter,
- la première branche en forme de U (2) est adaptée pour venir en appui contre la paroi extérieure correspondante d'une goulotte et comporte un dispositif permettant de supporter le clip pour goulotte à la goulotte,
- à l'extrémité supérieure de la première branche en forme de U (2) en appui contre la goulotte est prévue une traverse (5) qui s'étend en direction vers l'extrémité supérieure de la deuxième branche en U (3),
- un assemblage par encliquetage (6) est prévue à l'extrémité libre de la traverse (5) et à l'extrémité supérieure adjacente de la deuxième branche en U (3) pour fermer la zone de logement (4),
- l'assemblage par encliquetage (6) comporte deux ergots de retenue (7, 8) qui s'engagent l'un au-dessus de l'autre et s'encliquettent élastiquement l'un derrière l'autre,
- la deuxième branche en U (3) peut être courbée élastiquement, et **caractérisé en ce que**
- des nervures de retenue saillantes (16), orientées dans la direction des câbles à poser, sont disposées sur au moins un côté de la première branche en U (2) et présentent des renflements (17) à leurs extrémités opposées à la branche en U (2).

2. Clip pour goulotte selon la revendication 1,
**caractérisé en ce que** l'ergot de retenue (7) prévu sur la traverse (5) est orienté vers le haut et **en ce que** l'ergot de retenue (8) disposé sur la deuxième branche en U (3) est orienté vers le bas et s'enclenche derrière l'ergot de retenue (7) prévu sur la traverse (5) en glissant pardessus celui-ci.

3. Clip pour goulotte selon la revendication 2,
**caractérisé en ce qu'**une lèvre (18) est disposée sous l'ergot de retenue (8) prévu sur la deuxième branche en U (3), laquelle lèvre s'enfile sous la traverse (5) lors de l'encliquetage de l'assemblage par encliquetage (6).

4. Clip pour goulotte selon l'une quelconque des revendications 1 à 3, **caractérisé en ce que** les deux branches en U (2, 3) sont disposées parallèlement l'une à l'autre et **en ce que** la deuxième branche en U (3) doit être écartée de manière élastique pour ouvrir le clip pour goulotte et pour insérer ou retirer les câbles.

5. Clip pour goulotte selon l'une quelconque des revendications 1 à 3, **caractérisé en ce que** la deuxième branche en U (3) s'éloigne de la première branche en U (2) vers son extrémité supérieure et doit être courbée élastiquement en direction de la traverse (5) pour fermer le clip pour goulotte, jusqu'à ce que l'assemblage par encliquetage (6) s'enclenche en position.

6. Clip pour goulotte selon l'une quelconque des revendications 1 à 5, **caractérisé en ce que** l'étrier en forme de U (1) présente la forme d'une large bande.

7. Clip pour goulotte selon la revendication 6,
**caractérisé en ce que** l'assemblage par encliquetage (6) s'étend sur toute la largeur de la bande.

8. Clip pour goulotte selon la revendication 6 ou 7,
**caractérisé en ce que** l'un des ergots de retenue (8) de l'assemblage par encliquetage présente, dans sa partie centrale, un évidement (13) et l'autre ergot de retenue (7) présente une saillie (12) s'engageant dans l'évidement (13).

9. Clip pour goulotte selon l'une quelconque des revendications 1 à 8, **caractérisé en ce qu'**un bras de levier (11) orienté vers le haut est prévu à l'extrémité supérieure de la deuxième branche en U (3) afin de faciliter l'ouverture et la fermeture de l'assemblage par encliquetage (6).

10. Clip pour goulotte selon l'une quelconque des revendications 1 à 9, destiné à des goulottes comportant des poches de réception prévues sur leurs parois extérieures verticales, **caractérisé en ce qu'**à l'extrémité supérieure de la partie extérieure de la première branche en U (2) est prévue une branche de retenue (9) orientée vers le bas, qui s'accroche dans la poche de réception correspondante.

11. Clip pour goulotte selon la revendication 10,
**caractérisé en ce qu'**une lèvre élastique (10) est prévue sur la face intérieure de la branche de retenue (9).

12. Clip pour goulotte selon l'une quelconque des revendications 1 à 9 pour des goulottes de guidage à parois extérieures verticales lisses, **caractérisé en ce qu'**une élévation (14) pourvue d'une ouverture de passage (15) est disposée sur la face supérieure de la traverse (5) disposée sur la première branche en U (2), l'ouverture de passage (15) étant destinée à un élément de fixation.

13. Clip pour goulotte selon l'une quelconque des revendications 1 à 12, **caractérisé en ce que** le clip pour goulotte est réalisé sous la forme d'une pièce moulée par injection en plastique d'un seul tenant.
